Europäisches Patentamt

European Patent Office

Office européen des brevets

(11) Publication number: **0 547 278 A1**

## EUROPEAN PATENT APPLICATION

(21) Application number: **91500141.6**

(22) Date of filing: **16.12.91**

(51) Int. Cl.5: **C06B 47/14**, C06B 23/00, B01J 19/06

(43) Date of publication of application:
**23.06.93 Bulletin 93/25**

(84) Designated Contracting States:
**DE ES FR**

(71) Applicant: **UNION ESPANOLA DE EXPLOSIVOS S.A.**
**Claudio Coello 124**
**E-28006 Madrid(ES)**

(72) Inventor: **Rego Lopez,José Manuel**
**Artazagane Auzoa 24**
**E-48940 Leioa, Vizcaya(ES)**
Inventor: **Gonzalez, Ocejo, Agustin**
**Estrada de Mala 10**
**E-48012 Bilbao, Vizcaya(ES)**
Inventor: **Vidal Rodriguez, Luis Antonio**
**Fermin Caballero 57**
**E-28034 Madrid(ES)**
Inventor: **Andrio Zabala, Juan Antonio**
**Rodriguez Arias 20**
**E-48011 Bilbao, Vizcaya(ES)**

(74) Representative: **Garcia Cabrerizo, Francisco**
**OFICINA GARCIA CABRERIZO S.L. Vitruvio 23**
**E-28006 Madrid (ES)**

(54) Explosive watergels based on protonized vinyl basic polymers.

(57) The present invention relates to watergel explosive compositions which are constituted by water, oxidizing salts, sensitizers, natural occurring polymers, a crosslinker system and synthetic vinyl polymers which include amine or amide groups within their structure and the procedure to manufacture them. The attachement of protons to the hydrophilic functional groups of the synthetic vinyl polymer by adition of an acid during the explosive manufacturing process, gives rise to a polymer which exhibits higher solubility in the hydrogel oxidazing salt aqueous solution, which constitutes the objective of the present invention. This solubility enhancement is associated with lower processing times and consequently a reduction of production costs. By this method which is the object of the present invention, the degree of protonation required to obtain a soluble polymer or to increase solubility to a given extent, depending upon the basic polymer used, can be achieved.

EP 0 547 278 A1

BACKGROUND OF THE INVENTION

The present invention relates to explosive compositions which are constituted by water, oxidizing salts, thickening agents, a cross-linker system and a sensitizer. The presence of water in these materials in conjunction with their gel structure justifies the commom nomenclature "watergels" used to name them. Traditional explosive watergels are two phases systems (watergels exhibiting only one phase are also manufactured). Thus, part of the oxidizing salts (and sometimes the sensitizer) are dissolved in water and the rest are dispersed in this solution. If the sensitizer is not water soluble such as trinitrotoluene (TNT), pentaerythritol tetranitrate (PETN), cyclo-1,3,5-trimethylene-2,4,6-trinitramine (RDX), picric acid (PA) and the like, it is also added in the solid phase. Effective dispersion is achieved by the use of thickening agents which increase the viscosity of the system to a extent for which heterogeneity of the final product is precluded. Thickenig and subsequent crosslinking is also required in order to provide the watergel with good water resistance properties since dilution of the salts by the water present within the borehole would give rise to adverse changes in the product composition and consequently to a poorer blasting performance. Thickening agents commonly used can be naturally occurring polymers such as galactomannans and the like as well as synthetic polymers such as polyacrylamide (PAAM), polvinyl alcohol (PVA), hydroxyethyl cellulose (HEC) and the like.

Watergels thickened with synthetic polymers present various disadvantages over those prepared with naturally occurring polymers, viz. (i) they present better rheological properties (flowability) which allows a more homogeneous filling of the borehole; (ii) watergels crosslinked with synthetic polymers are less sensitive to pH changes and (iii) synthetic polymers-based wategels are more stable at high temperatures. However, the use of synthetic vinyl polymers on the preparation of watergels is also associated with some inconveniences derived from their solubility in water: (i) The high molecular weights required to produce a gel with appropriate rheological properties (1 - 25 million g mol$^{-1}$) in conjunction with the low water content employed in the manufacture of these gels give rise to long residence time within the homogeneizer and consequently lower outputs; (ii) cartridged watergels are only attainable by using a high concentration of cross-linker or a high concentration of polymer. None of these two choices appear to be satisfactory since a high concentration of cross-linker yields a very rapid cross-linking step which brings about a reduction of the time interval required by the packing process. If, on the other hand, a high concentration of polymer is used, the first drawback commented above becomes more pronounced and high temperatures must be employed in order to enhance solubility. These drawbacks mentioned are overcome by using vinyl polymers as is the object of the present invention.

Linear water soluble or water dispersable vinyl polymers have been proposed as gelling or thickening agents for explosive watergels in various patents. In this connection, the following U.S. Patents should be commented: 3.097.120, 3.097.121, 3.341.383, 3.355.336, 3.574.011, 3.622.408 and 3.717.519.

The U.S. patent 3.097.120 describes a watergel which was effectively thickened and gelled with partially hydrolyzed PAAM (0.1-10 %). The crosslinking process proceeded through the formation of coordination bounds between the polymer functional groups and a polyvalent cation such as aluminum (III), chromium (III), iron (III), tin (II or IV) and the like. The gels obtained exhibited good fluidity and storage stability. The authors of this patent, furthermore, found necessary the presence of a certain concentration of acid groups within the polymeric chain. These groups are introduced by means of acid or basic hydrolysis. The minimum content of carboxylic groups was reported to be 0.1 weight % whereas a degree of hydrolisis higher than 10 weight % was found to be excesive. The U.S. patent 3.097.121 relates to powdered explosives which contain PAAM. The polymer swells in the presence of water and the explosive composition becomes a soft highly-viscous but cohesive gel. Salts of polyvalent metals are used as crosslinking agents. The U.S. patent 3.341.383 states that the extent of hydrolisis of the PAAM to be used should range between 15 and 40 weight % in order to obtain watergels which exhibit appropriate rheological properties. Also in this patent and in the U.S. patents 3.355.336 and 3.622.408 watergels which contain galactomannans in conjunction with PAAM are described. The use of PAAM as thickening agent and of guar gum as gelling agent allowed the authors to taylor compositions showing a wide range of rheological properties as a function of the ratio PAAM:galactomannan. The U.S. patent 3.574.011 discloses pourable watergels comprised of ammonium perchlorate (AP) as the major component in order to prevent salting-out effects during the cooling stage of the process. The thickening system consists of two polymers: (i) polymer I which is a partially hydrolyzed PAAM (15-40 weight % of acid groups) and (ii) polymer II which is a copolymer of acrylamide and an acrylate of an alkaline element or ammonium acrylate. The ratio of acrylamide to acrylate varies from 40:1 to 2:1. This polymer is used disolved in a binary solvent water/alcohol or water/acetone or a ternary system water/alcohol/acetone. Salts of metal ions such as chromium acetate, ferric citrate and aluminium sulphate are used as cross-linkers. Finally, the U.S. patent 3.717.519 describes watergels thickened with hydrolyzed PAAM (11-40 weight % of acid groups) which can be cross-linked with different combinations of redox pairs. Thus, for instance, a croslinking system described in this patent is comprised of a bichromate (sodium, potassium or ammonium bichromate) which in the acid medium brought about by the presence of $NH_4^+$ groups undergoes reduction to $Cr^{3+}$. The crosslinking reaction takes days and even weeks to finish.

DETAILED DESCRIPTION OF THE INVENTION

The aim of the present invention is a watergel explosive composition constituted by water, oxidizing salts, sensitizers, natural occurring polymers, a crosslinker system and synthetic vinyl polymers which include amine or amide groups within their structure and the procedure to manufacture them. The attachement of protons to the hydrophilic functional groups of the synthetic vinyl polymer by adition of an acid during the explosive manufacturing process, gives rise to a polymer which exhibits higher solubility in the hydrogel oxidazing salt aqueous solution, which constitutes the objective of the present invention. This higher solubility associated with the protonized vinyl polymer yields shorter dispersion and disolution times. The binding of protons to the polymer hydrophilic functional groups occurs through an acid-base reaction between an acid and the polymer basic sites. Suitable acids that can be used to protonize the polymer are: nitric acid, sulphuric acid, hydrochloric acid, hydrobromic acid, and the like. Organic acids such as acetic acid, chloroacetic acid, butyric acid, benzoic acid, chlorobenzoic acid and the like can also be used succesfully.

With regard to the vinyl polymers that can undergo protonation, the following are particularly relevant to the present invention: PAAM, partially hydrolized PAAM, poly (2-vinyl pyridine) (P2VP), poly( 4-vinyl pyridine) (P4VP) and poly (2-vinyl pyrrolidine). Degrees of protonation ranging from 0.1 to 20 % are required in order to obtain the desired solublity although degrees of protonation in the range 0.2-15 % are preferred. Adequate mean polymer molecular weights for the preparation of hydrogels of desired rheological properties range from 1 to 25 millions g $mol^{-1}$. Lower molecular weights do not provide the system with sufficient viscosity. The concentration of polymer can vary from 0.1 to 4 weight % of the total mass of the formulation although concentrations ranging from 0.2 to 2.5 are preferred.

When the vinyl polymer constitutes both the thicknening and gelling system, a salt of a multivalent cation should be used to produce the crosslinking reaction. The following compounds or their blends are specially appropriate for the purposes of the present invention: (i) salts of metal cations such as aluminium sulphate, aluminium citrate, ferric citrate, ferric sulphate, chromium citrate and the like and (ii) redox pairs such as bichromate/arsenite and the like. Crosslinker concentrations between 0.01 and 0.2 % by weight of the total mass of the formulation must be used in order to obtain gels of the desired properties although preferable concentrations range from 0.05 to 0.15 %.

In some compositions, the vinyl polymer is the thickening agent only and a naturally ocurring polymer is the gelling agent. Guar gum, xantane gum, cellulose derivatives and the like as well as combinations of these compounds are adequate candidates for the purpose mentioned. The concentration of naturally occurring polymer can vary from 0.1 to 2 weight % of the total mass of the formulation although concentration ranging from 0.2 to 1.5 are preferred. Feasible crosslinking systems for these polymers are bichromates (sodium, potassium, ammonium bichromates and the like), potassium piroantimoniate, sodium borate, titanium quelate, hydroxyprpylamine zirconium lactate and the like as well as combinations of these compounds. The concentration of crosslinker varies from 0.001 to 0.2 % by weight of polymer used although preferable concentrations range from 0.005 to 0.15 %.

The explosive watergels manufactured with thickening and crosslinking agents constituted by protonized vinyl polymers, which are the objective of the present invention, are also comprised of oxidizing salts, sensitizers and fuels which provide the slurry formulation with the desired detonation properties. Oxidizers commonly employed in these slurry formulations are: ammonium nitrate (AN), sodium nitrate (SN), potassium nitrate (KN) and other nitrates of alkaline earth elements, ammonium perchlorate (AP) and perchlorates of alkaline and alkaline earth metals. The overall concentration of oxidizing salts can vary from 30 to 90 % by weight of the total mass of the watergel although preferable concentrations range from 40 to 85 %. The sensitizers which can be used in the present invention may be categorized into two types: water soluble sensitizers and water insoluble sensitizers. With regard to the former, the following precursors of organic nitrates which contain an amine group in their structures are worthwhile mentioning: monomethylamine, hexamine, ethanolamine, diethanolamine, triethanolamine, diethylentriamine, diethylamine, ethylendiamine, dimethylamine, ... Relevant water insoluble sensitizers include: TNT, PETN, dinitrotoluene and the like. Concentrations of sensitizers commonly employed range from 1 to 50 % by weight of the total mass of the watergel although preferable concentrations range from 2 to 40 %. Among the different fuels that can be employed, the following ones are especially notewhorthy: starch, sawdust, rubber, aluminum, organic liquids such as alcohols (methanol, ethanol, glycols ...) and the like. Fuel concentrations in the range from 0.5 to 20 % by weight of the total weight of the watergel will be preferred. Finally, additional ingredients for these watergel formulations are: (i) density modifiers such as glass microballons, polymer microballons, perlite and redox pairs which free a gas which remains trapped within the gel matrix as a consecuence of the surface tension of this in conjunction with the rheological properties of the system. Concentrations of density modifiers ranging from 0.01 to 2 % by weight of the total weight of the watergel are commonly used; (ii) flame inhibitors such as sodium chloride, potassium chloride or ionic pairs that produce sodium chloride or potassium chloride during the detonation. Concentrations of flame inhitors in the range 1 to 30 % by weight of the total mass of the watergel are usually required to obtained the desired flame inhibition.

The manufacturing process of the watergels of the present invention involves the preparation of two master solutions. Both the vinyl polymer and the acid are added to the nitrate salts aqueous solution in order to obtain the protonized polymer. The pH of this solution varies between 3 and 7 and its processing temperature ranges from 30 and 80 °C depending upon the water content and the nitrates concentrations. The second solution comprises the water soluble sensitizer. In some instances, the sensitizer will be accompanied by oxidizing salts. By this mean, unadvisibly high processing temperatures are precluded. A solid mixture constituted by nitrates, solid fuels, gums and crosslinkers, flame inhibitors, ... is also prepared. This mixture is dispersed within the viscous solution containing the vinyl polymer. If the watergel is gelled through the formation of coordination bounds between the vinyl polymer and a metal cation, two cases should be considered: (i) the metal cation is freed as a consequence of a redox reaction which takes place between the components of the redox pair. In this case, one of the constituents of the redox pair will be added to the oxidizing salts aqueous solution and the other one to the sensitizer solution in order to prevent the redox reaction to take place before required. Thus, if the redox pair bichromate/arsenite is used, the first component will be added to the solution without polymer and the second one to the polymer solution; (ii) the metal cation comes from the dissociation in the aqueous solution of a salt such as aluminum sulphate. The salt is added to the solution which does not contain the polymer in order to prevent undesirable crosslinking reactions before a homogeneous mixture is obtained.

In the following paragraphs, examples of explosive watergels in conjunction with some properties of the finished product are given in order to illustrate the compositions and the manufacturing process which are the objective of the present invention. It should be noted that these examples are not restrictive and many other formulations are also plausible. Table I summarizes both the components used as well as their concentrations of the six formulations described bellow.

EXAMPLE 1

A packaged slurry formulation was prepared in this example. The components of this watergel and their corresponding concentrations are (expressed in % by weight): 43.06 % of AN; 11.12 % of SN; 11.84 % of water; 24.72 % of monomethylamine nitrate (MAN); 2.92 % of AP; 1.54 % of atomized aluminum; 1 % of paint grade aluminum; 1.54 % of P4VP; 0.27 % of aqueous nitric acid solution (60 %); 1 % of glass microballoons and 1 % of guar gum with potassium piroantimoniate. The solution containing the protonized P4VP presents a crystallization point ranging from 50 to 55 °C. The viscosity of this solution is in the range from 1 to 1.5 Pa.s. The protonated P4VP used here gets dissolved within the nitrate solution in about 18. It should be noted that P4VP is not soluble in water by itself. The solution containing the sensitizer exhibits a crystallization point of ca. 40 °C.

The explosive composition prepared shows a theoretical explosion heat equal to 3515 kJ kg$^{-1}$; the velocity of detonation (VOD) of this iron confined watergel (diameter = 0.068 m) at 20 °C is over 5 km s$^{-1}$. The density measured ranges from 1150 to 1200 kg m$^{-3}$. The volume of gases evolved is 0.96 m$^3$ kg$^{-1}$.

EXAMPLE 2

An explosive composition which can be used in underground metal mines and underground civil engineering labours was prepared. The constituent ingredients and their corresponding concentrations are: 11.17 % of water; 50.84 % of AN; 13.49 % of SN; 18 % of TNT; 2 % of paint grade aluminum; 1.9 % of 10 % hydrolized PAAM; 2 % of ethanol; 0.5 % of aqueous nitric acid (60 % solution) and 0.1 % of aluminium sulphate. The solution containing the protonated PAAM presents a crystallization point ranging from 55 to 60 °C. The viscosity of this solution is in the range from 7 to 10 Pa.s. The protonated PAAM used here gets dissolved within the nitrate solution in about 12 hours which is a much shorter disolution time than that found for PAAM itself in the same aqueous nitrate medium (around 24 hours). The solution containing the sensitizer exhibits a crystallization point of ca. 40 °C.

The explosive composition prepared shows a theoretical explosion heat equal to 3205 kJ kg$^{-1}$; the velocity of detonation of this iron confined watergel (diameter = 0.050 m) at 20 °C is over 4 km s$^{-1}$. The experimental density measured ranges from 1180 to 1200 kg m$^{-3}$. The volume of gases evolved is 0.89 m$^3$ kg$^{-1}$.

EXAMPLE 3.

A pourable blasting watergel was obtained when the following components and corresponding concentrations are used: 34.69 % of AN; 11.35 % of SN; 27.69 % of MAN; 8.0 % of calcium nitrate; 13.77 % of water; 0.5 % of aqueous nitric acid (60 % solution); 2 % of ethanol; 1.9 % of 10 % hydrolyzed PAAM and 0.1 % of aluminium sulphate. The solution containing the protonated PAAM presents a crystallization point ranging from 47 to 52 °C. The viscosity of this solution is in the range from 7 to 10 Pa.s. The solution containing the sensitizer exhibits a crystallization point of ca. 40°C.

The explosive composition prepared shows a theoretical explosion heat equal to 3046 kJ kg$^{-1}$; the velocity of detonation of this iron confined watergel (diameter = 0.068 m) at 20 °C is over 3.5 km s$^{-1}$. The experimental density measured ranges from 1260 to 1300 kg m$^{-3}$. The volume of gases evolved is 0.95 m$^3$ kg$^{-1}$.

EXAMPLE 4.

The explosive composition prepared in this example finds application in open pits, especially for large caliber blasting operations, i.e. larger than 0.14 m. The constituent components and their corresponding concentrations are: 11.80 % of water; 9.31 % of hexamine nitrate; 3.5 % of AP; 61.37 % of AN; 10.0 % of SN; 1.5 % of 10 % hydrolized PAAM; 1 % of ethanol; 0.1 % of sodium bichromate; 0.01 % of sodium arsenite; 0.4 % of aqueous nitric acid (60 % solution) and 1 % of glass microballons. The solution containing the protonated PAAM presents a crystallization point ranging from 0 to 10 °C. The viscosity of this solution is in the range from 2 to 3 Pa.s. The viscosity of the end-product varies from 20 to 40 Pa.s.

The explosive composition prepared shows a theoretical explosion heat equal to 2900 kJ kg$^{-1}$; the velocity of detonation of this iron confined watergel (diameter = 0.050 m) at 20 °C is over 4.3 km s$^{-1}$. The experimental density measured ranges from 1150 to 1200 kg m$^{-3}$. The volume of gases evolved is 0.89 m$^3$ kg$^{-1}$.

EXAMPLE 5.

The explosive composition prepared in this example can be used in underground coal mining. It is a permitted explosive based upon the ionic pair technology. This high explosive, furthermore, fulfils the Spanish regulations on permitted explosives. The constituent ingredients and their corresponding concentrations are: 9.8 % of water; 14 % of ammonium chloride; 22 % of AN; 3 % of calcium nitrate; 34.0 % of SN; 9.8 % of MAN; 1.4 % of paint grade aluminum; 1.5 % of P4VP; 0.5 % of ethyleneglycol; 0.2 % of aqueous nitric acid (60 % solution); 1 % of guar gum with potassium piroantimoniate and 2.8 % of perlite. The solution containing the protonated P4VP presents a crystallization point ranging from 55 to 60 °C. The viscosity of this solution is in the range from 1.5 to 2 Pa.s. The solution containing the sensitizer exhibits a crystallization point of ca. 40 °C.

The explosive composition prepared shows a theoretical explosion heat equal to 3046 kJ kg$^{-1}$; the velocity of detonation of this iron confined watergel (diameter = 0.032 m) at 20 °C is over 3.5 km s$^{-1}$. The experimental density measured ranges from 1050 to 1100 kg m$^{-3}$. The volume of gases evolved is 0.95 m$^3$ kg$^{-1}$.

EXAMPLE 6.

The explosive composition prepared in this example is a pourable blasting agent. The ingredients and their corresponding concentrations used are: 16.58 % of water; 47.3 % of MAN; 19 % of AN; 13.00 % of SN; 1.80 % of 10 % hydrolyzed PAAM; 0.2 % of aqueous nitric acid (60 % solution); 1 % of ethanol; 1 % of glass microballons and 0.12 % of aluminium sulphate. The solution containing the protonated PAAM presents a crystallization point ranging from 40 to 45 °C. The viscosity of this solution is in the range from 2.5 to 3 Pa.s. The solution containing the sensitizer exhibits a crystallization point of ca. 35 °C.

The explosive composition prepared shows a theoretical explosion heat equal to 2720 kJ kg$^{-1}$; the velocity of

Table 1. Ingredients, concentrations and characteristics of watergel-type explosives as described in examples 1-6.

| INGREDIENTS | 1 | 2 | 3 | 4 | 5 | 6 |
|---|---|---|---|---|---|---|
| Water. | 11.84 | 11.17 | 13.77 | 11.80 | 9.80 | 16.58 |
| Ammonium nitrate | 43.06 | 50.84 | 34.69 | 61.37 | 22.00 | 19.0 |
| Sodium nitrate | 11.12 | 13.49 | 11.35 | 10.00 | 34.00 | 13.00 |
| Calcium nitrate | | | 8.00 | | 3.0 | |
| Methylamine nitrate | 24.72 | | 27.69 | | 9.8 | 47.30 |
| Hexamine nitrate | | | | 9.31 | | |
| Ammonium perchlorate | 2.92 | | | 3.50 | | |
| Ammonium chloride | | | | | 14.0 | |
| Aluminium sulphate | | 0.1 | 0.1 | | | 0.12 |
| Sodium bichromate | | | | 0.1 | | |
| Sodium arsenite | | | | 0.01 | | |
| Polyacrylamide | | 1.9 | 1.9 | 1.5 | | 1.8 |
| Poly 4-vinyl pyridine | 1.54 | | | | 1.5 | |
| Nitric acid (60 % solution) | 0.27 | 0.5 | 0.5 | 0.4 | 0.2 | 0.2 |
| Guar Gum | 0.99 | | | | 0.99 | |
| Potassium piroantimoniate | 0.001 | | | | 0.001 | |
| Ethanol | | 2.0 | 2.0 | 1.0 | | 1.0 |
| Ethylenglycol | | | | | 0.5 | |
| TNT | | 18.0 | | | | |
| Aluminum (PG) | 1.0 | 2.0 | | | 1.4 | |
| Aluminum (atomized) | 1.54 | | | | | |
| Glass microballons | 1.0 | | | 1.0 | | 1.0 |
| Perlite | | | | | 2.8 | |
| Heat of explosion /kJ kg$^{-1}$ | 3515 | 3205 | 3046 | 2900 | 3046 | 2720 |
| VOD / km s$^{-1}$ | 5.0 | 4.0 | 3.5 | 4.3 | 3.5 | 3.5 |
| Density / kg m$^{-3}$ | 1150-1200 | 1180-1200 | 1260-1300 | 1150-1200 | 1050-1100 | 1260-1300 |
| Volume of gases evolved / m$^3$ kg$^{-1}$ | 0.96 | 0.89 | 0.95 | 0.89 | 0.95 | 0.95 |

detonation of this iron confined watergel (diameter = 0.085 m) at 20 °C is over 3.5 km s$^{-1}$. The experimental density measured ranges from 1260 to 1300 kg m$^{-3}$. The volume of gases evolved is 0.95 m$^3$ kg$^{-1}$.

**Claims**

1. An explosive composition consisting of oxidizing salts, thickening agents, gelling systems, fuels, sensitizers, density modifiers and water are described in this patent. The thickening and gelling agents used in the present invention are synthetic vinyl polymers which include amine or amide groups within their structure. The attachement of protons to the hydrophilic functional groups of the synthetic vinyl polymer by adition of an acid during the explosive manufacturing process, gives rise to a polymer which exhibits higher solubility in the hydrogel oxidazing salt aqueous solutionpresent basic hydrophilic groups attached to the backbone.

   The explosive compositions of the present invention also contain the following compounds: (i) oxidizing salts such as ammonium nitrate, sodium nitrate, potassium nitrate, nitrates of alkaline earth elements, ammonium perchlorate and perchlorates of alkaline and alkaline earth metals. The overall concentration of oxidizing salts can vary from 30 to 90 % by weight of the total mass of the watergel although preferable concentrations range from 40 to 85 %; (ii) sensitizers which can be categorized into two types: water soluble sensitizers and water insoluble sensitizers. With regard to the former, the following amine precursors of organic nitrates are especially notewhorthy: monomethylamine, hexamine, ethanolamine, diethanolamine, triethanolamine, diethylentriamine, diethylamine, ethylendiamine, dimethylamine, ... Relevant water insoluble sensitizers include: TNT, PETN, dinitrotoluene and the like. Common concentrations of sensitizers employed range from 1 to 50 % by weight of the total mass of the watergel although preferable concentrations range from 2 to 40; (iii) fuels such as starch, sawdust, rubber, aluminum, organic liquids such as alcohols (metahnol, ethanol, glycols ...) and the like. Fuel concentrations in the range from 0.5 to 20 % by weight of the total mass of the watergel will be preferred; (iv) density modifiers such as glass microballons, polymer microballons, perlite and redox pairs which free a gas which remains trapped within the gel matrix as a consecuence of the surface tension of this in conjunction with the rheological properties of the system. Concentrations of density modifiers ranging from 0.01 to 2 % by weight of the total mass of the watergel are commonly used and (v) flame inhibitors such as sodium chloride or ionic pairs that produce sodium chloride during the detonation. Concentrations of flame inhitors in the range from 1 to 40 % by weight of the total mass of the watergel are usually required to obtained the desired flame inhibition.

2. Compositions according to claim 1 wherein the molecular weight of the vinyl polymer should vary within the range 1 to 25 million g mol$^{-1}$ in order to obtain good quality gels.

3. Compositions according to claim 1 wherein polymer concentrations which meet the required conditions can vary from 0.1 to 4 weight % of the total mass of the formulation although concentrations ranging from 0.2 to 2.5 are preferred.

4. Compositions according to claim 1 wherein vinyl polymers such as unhydrolyzed PAAM, hydrolyzed PAAM (degree of hydrolysis between 0.1 and 10 %), poly (4-vinyl pyridine), poly (2-vinyl pyridine), poly (N-vinyl pyrrolidone) and the like are used as thickening and gelling agents.

5. Compositions according to claim 1 wherein protonation of the basic vinyl polymer is carried out by means of acids such as: nitric acid, sulphuric acid, hydrochloric acid, hydrobromic acid, and the like. Organic acids such as acetic acid, chloroacetic acid, butyric acid, benzoic acid, chlorobenzoic acid and the like. Degrees of protonation varying from 0.1 to 20 % are useful for the purposes of the present invention, although degrees within the range 0.1 to 15 % are preferred.

6. Compositions according to claims 1 and 5 wherein suitable cross-linking systems for the purposes of the present invention are: (i) salts of metal cations such as aluminium sulphate, aluminium citrate, ferric citrate, ferric sulphate, chromium citrate and the like and (ii) redox pairs such as sodium bichromate/sodium arsenite and the like. Cross-linker concentrations between 0.01 and 0.2 % by weight of the total mass of total mass of watergel must be used in order to obtain gels of the desired properties although preferable concentrations range from 0.05 to 0.1 %.

7. Compositions according to claims from 1 to 6 where naturally occurring polymers such as guar gum, xantane gum, starch and cellulose derivatives and the like, denoted herein as galactomannans, can be used in conjunction with the basic vinyl polymers. The latter will constitute the thickening system, whereas the former are the gelling systems. The concentration of galactomannan can vary from 0.1 to 2 weight % of the total mass of the formulation although concentrations ranging from 0.2 to 1.5 are preferred. Feasible cross-linking systems for these polymers are bichromates (sodium, potassium, ammonium bichromates and the like), potassium piroantimoniate, sodium borate, titanium quelate, hydroxyprpylamine zirconium lactate and the like as well as combinations of these compounds. The concentration of cross-linker can vary from 0.001 to 0.2 % by weight of the total mass of the watergel although preferable concentrations range from 0.005 to 0.1 %.

8. A manufacturing process of the explosive composition according to claims from 1 to 7 which involves the preparation of two master solutions. Both the vinyl polymer and the acid are added to the nitrate salts aqueous solution in order to obtain the protonized polymer. The pH of this solution varies between 3 and 7 and its processing temperature ranges from 30 and 80 °C depending upon the water content and the nitrates concentrations. The second solution comprises the water soluble sensitizer. In some instances, the sensitizer will be accompanied by oxidizing salts. By this mean, unadvisibly high processing temperatures are precluded. A solid mixture constituted by nitrates, solid fuels, gums and crosslinkers, flame inhibitors, ... is also prepared. This mixture is dispersed within the viscous solution containing the vinyl polymer. If the watergel is gelled through the formation of coordination bounds between the vinyl polymer and a metal cation, two cases should be considered: (i) the metal cation is freed as a consecuence of a redox reaction which takes place between the components of the redox pair. In this case, one of the constituents of the redox pair will be added to the oxidizing salts aqueous solution and the other one to the sensitizer solution in order to prevent the redox reaction to take place before required. Thus, if the redox pair bichromate/arsenite is used, the first component will be added to the solution without polymer and the second one to the polymer solution; (ii) the metal cation comes from the dissociation in the aqueous solution of a salt such as aluminum sulphate. The salt is added to the solution which does not contain the polymer in order to prevent undesirable crosslinking reactions before a homogeneous mixture is obtained.

European Patent
Office

**EUROPEAN SEARCH REPORT**

Application Number

EP 91 50 0141

Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 154 430 (E.I. DU PONT DE NEMOURS AND COMPANY) <br> * page 2, line 63 - page 3, line 100 * <br> * page 3, line 112 - line 123 * <br> * page 5, line 5 - line 117 * <br> * page 6, line 7 - line 29 * <br> * page 8; claims * <br> --- | 1-8 | C06B47/14 <br> C06B23/00 <br> B01J19/06 |
| Y | EP-A-0 055 801 (RÖHM GMBH) <br> * page 7, line 24 - page 11, line 26; claims * <br> * page 13, line 16 - line 26 * <br> --- | 1-4,8 | |
| Y | US-A-3 485 686 (H.A. JESSOP ET AL.) <br> * column 2, line 55 - line 59; claims * <br> --- | 7 | |
| D,Y | US-A-3 574 011 (H.K. KNIGHT) <br> * claims * <br> --- | 6,7 | |
| Y | US-A-3 507 720 (M.L. PETERSON) <br> * column 5, line 71 - column 6, line 34 * <br> * column 6, line 57 - line 65; claims * <br> --- | 1,8 | |
| Y | FR-A-1 543 732 (AMERICAN CYANAMID COMPANY) <br> * page 3, left column, line 8 - right column, line 52 * <br> * page 4, left column, line 39 - right column, line 2 * <br> --- | 1,4,8 | **TECHNICAL FIELDS SEARCHED (Int. Cl.5)** <br><br> C06B <br> B01J |
| Y | US-A-4 096 003 (O. MACHACEK) <br> * column 5, line 7 - line 62; claims * <br> --- | 1-7 | |
| Y | EP-A-0 194 775 (E.I. DU PONT OE NEMOURS AND COMPANY) <br> * page 9 - page 13; claims * <br> * page 24 * <br> --- | 1-7 | |
| D,A | US-A-3 717 519 (H.W. SHEERAN ET AL.) <br> * claims * <br> --- | 1 | |
| | -/-- | | |

The present search report has been drawn up for all claims

| Place of search | Date of completion of the search | Examiner |
|---|---|---|
| THE HAGUE | 10 SEPTEMBER 1992 | SCHUT R.J. |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons
......................................................................................
& : member of the same patent family, corresponding
　　document

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 077 820 (F. BOLZA ET AL.) | | |

----

TECHNICAL FIELDS
SEARCHED (Int. Cl.5 )

The present search report has been drawn up for all claims

| Place of search | Date of completion of the search | Examiner |
|---|---|---|
| THE HAGUE | 10 SEPTEMBER 1992 | SCHUT R.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................

& : member of the same patent family, corresponding
    document

EPO FORM 1503 03.82 (P0401)